# EUROPÄISCHE PATENTANMELDUNG

(11) **EP 3 657 251 A1**
(43) Veröffentlichungstag der Anmeldung: **27.05.2020**
(21) Anmeldenummer: 19207385.6
(22) Anmeldetag: 06.11.2019
(51) Int. Cl.: G03B 21/20, G03B 33/12

(54) **BELEUCHTUNGSVORRICHTUNG FÜR EINEN EINEN LICHTMODULATOR AUFWEISENDEN PROJEKTOR**

(30) Priorität: 15.11.2018 DE 102018128743
(71) Anmelder: Carl Zeiss Jena GmbH, 07745 Jena (DE)
(72) Erfinder: Heidkamp, Marcus, 07745 Jena (DE); Krause, Axel, 07751 Jena (DE); Döring, Dirk, 99094 Erfurt (DE); Klopfleisch, Peter, 07751 Jena (DE); Gratzke, Alexander, 07745 Jena (DE); Moffat, Bryce Anton, 07743 Jena (DE)
(74) Vertreter: Patentanwälte Geyer, Fehners & Partner mbB

(57) **Zusammenfassung**

Beschrieben wird eine Beleuchtungsvorrichtung für einen einen Lichtmodulator (3, 47) aufweisenden Projektor (2), die
ein erstes festkörperbasierten Beleuchtungsmodul (4), das ein erstes Lumineszenzmaterial (9) und eine erste Festkörperlichtquelle (7) aufweist, die eine erste Anregungsstrahlung (8) abgibt, die auf das erste Lumineszenzmaterial (9) gerichtet ist, das daraufhin eine erste Lumineszenzstrahlung (10) mit einem ersten Spektrum (K1) abgibt,
ein zweites festkörperbasierten Beleuchtungsmodul (5), das ein zweites Lumineszenzmaterial (13) und eine zweite Festkörperlichtquelle (11) aufweist, die eine zweite Anregungsstrahlung (12) abgibt, die auf das zweite Lumineszenzmaterial (13) gerichtet ist, das daraufhin eine zweite Lumineszenzstrahlung (14) mit einem zweiten Spektrum (K2) abgibt,
eine Überlagerungseinheit (16, 20), die die erste und die zweite Lumineszenzstrahlung (10, 14) in einen Beleuchtungsstrahlengang einkoppelt, in dem es bis zum Ende (E) des Beleuchtungsstrahlenganges geführt wird, um den Lichtmodulator (3, 47) zu beleuchten,
und eine Filtereinheit (22) aufweist, die aus der ersten Lumineszenzstrahlung (10) einer ersten Farbe (K3) und aus der zweiten Lumineszenzstrahlung (14) Licht einer zweiten Farbe (K4) so filtert, dass am Ende des Beleuchtungsstrahlenganges Licht der ersten und zweiten Farbe (K3, K4) vorliegt.

## Beschreibung

Die vorliegende Erfindung betrifft eine Beleuchtungsvorrichtung für einen einen Lichtmodulator aufweisenden Projektor.

Bei solchen Projektoren, die häufig auch als digitale Projektoren bezeichnet werden, kann der Lichtmodulator zeitsequentiell mit Licht verschiedener Farben aus verschiedenen Wellenlängenbereichen beleuchtet werden, um zeitsequentiell Farbteilbilder zu erzeugen, die für einen Betrachter nur in zeitlicher Überlagerung als mehrfarbiges Bild wahrnehmbar sind.

Dabei wird bisher häufig als Lichtquelle eine Quecksilber-Hochdrucklampe verwendet, aus deren Licht durch Farbfilter zeitsequentiell rotes, grünes und blaues Licht herausgefiltert und zur Beleuchtung des Lichtmodulators verwendet wird.

Ferner ist es bekannt, Leuchtdioden, Laser-Beleuchtung sowie Phosphor-konvertierte Laser-Beleuchtung einzusetzen. Hierbei sind in der Regel Kompromisse zu finden zwischen den Kosten, dem Lichtstrom, der Stabilität und weiteren Eigenschaften der Lichtquellen, wie z.B. Lebensdauer und Alterungsverhalten, optische Artifakte, wie Speckle bei Laserbeleuchtung, oder auch zulassungsrelevante Fragen (Lasersicherheit), etc.

Ausgehend hiervon ist es daher Aufgabe der Erfindung, eine Beleuchtungsvorrichtung für einen einen Lichtmodulator aufweisenden Projektor bereitzustellen, die möglichst wartungsarm ist und eine hohe Lebensdauer aufweist.

Die Aufgabe ist im Anspruch 1 definiert. Vorteilhafte Ausgestaltungen sind in den abhängigen Ansprüchen angegeben.

Durch die Verwendung des ersten und zweiten festkörperbasierten Beleuchtungsmoduls werden entgegen den bisher bekannten Lösungen zwei festkörperbasierte Beleuchtungsmodule vereint (insbesondere ein Festkörpermodul, dessen Strahlung für z.B. grünes Licht zum Beleuchten des Lichtmodulators und ein Festkörpermodul dessen Strahlung für z.B. gelbes Licht zum Beleuchten des Lichtmodulators genutzt wird), obwohl große Teile der Lichtströme aufgrund des großen spektralen Überlapps der beiden Festkörpermodule bei der Beleuchtung des Lichtmodulators verloren gehen. Jedoch ist trotz der relativ hohen Verluste aufgrund des großen spektralen Überlappbereichs immer noch ein höherer Lichtstrom möglich als mit klassischen LEDs.

Die Spektren (bzw. die spektralen Leistungsdichten) der ersten und zweiten Lumineszenzstrahlung können sich überlappen. Beispielsweise kann das Spektrum der ersten Lumineszenzstrahlung mehr als 50% des Wellenlängenbereiches (oder auch mehr als 60, 70 oder 80%) des Spektrums der zweiten Lumineszenzstrahlung und weniger als 100% (bevorzugt weniger als 95% oder 90%) abdecken. Insbesondere ist es bevorzugt, dass das Spektrum der zweiten Lumineszenzstrahlung eine höhere Intensität im roten Wellenlängenbereich aufweist als das Spektrum der ersten Lumineszenzstrahlung. Es ist jedoch auch möglich, dass die Spektren der ersten und zweiten Lumineszenzstrahlung gleich sind, was einem Überlapp von 100% entspricht.

Es werden somit zwei festkörperbasierte Beleuchtungsmodule kombiniert, deren Spektren (bzw. deren spektrale Leistungsdichten) sich deutlich überlappen. Dies führt jedoch automatisch dazu, dass sehr viel Lichtleistung (bzw. Strahlungsleistung) der festkörperbasierten Beleuchtungsmodule bei einer derartigen Kombination nicht genutzt werden kann.

So kann z.B. das erste Spektrum ein Maximum bei einer ersten Wellenlänge und das zweite Spektrum ein Maximum bei einer zweiten Wellenlänge aufweisen, wobei die zweite Wellenlänge größer ist als die erste Wellenlänge. Die erste Wellenlänge kann der Farbe Grün entsprechen und die zweite Wellenlänge kann der Farbe Gelb entsprechen, wobei das erste Spektrum zur Erzeugung einer grünen Farbe (ersten Farbe) und das zweite Spektrum zur Erzeugung einer roten Farbe (zweite Farbe) genutzt werden kann.

In diesem Fall kann beispielsweise von der von der ersten Lumineszenzstrahlung bereitgestellten ersten Lichtleistung ca. 70%, 75%, 80%, 85% oder 90% für das Licht der ersten Farbe benutzt werden. Somit liegt hier ein Verlust von 30%, 25%, 20%, 15% oder 10% der bereitgestellten ersten Lichtleistung vor. Bei der zweiten Lumineszenzstrahlung kann von der bereitgestellten zweiten Lichtleistung beispielsweise maximal 30%, 25%, 20% oder 15% für das Licht der zweiten Farbe genutzt werden. In diesem Fall liegt somit ein Verlust von 70%, 75%, 80% oder 85% vor.

Das zeigt, dass eine solche Kombination von festkörperbasierten Beleuchtungsmodulen normalerweise als unerwünscht anzusehen ist. Jedoch wird erfindungsgemäß ausgenutzt, dass der Anteil des Spektrums der zweiten Lumineszenzstrahlung für rotes Licht höher ist als der der ersten Lumineszenzstrahlung, so dass höhere Intensitäten für rotes Licht vorliegen. Dieser Vorteil wird zusammen mit dem Vorteil genutzt, dass das zweite festkörperbasierte Beleuchtungsmodul wesentlich stabiler hinsichtlich der Farbe und Helligkeit ist im Vergleich zu einer LED, die rotes Licht abstrahlt. Daher wird in unüblicher Art und Weise der hohe Verlust bei der zweiten Lumineszenzstrahlung in Kauf genommen, um eine möglichst hohe Intensität bei gleichzeitig sehr stabiler Farbe (also Wellenlänge) und Helligkeit zu erzielen.

Es wird somit auf eine rote LED, die üblicherweise ausgewählt werden würde, verzichtet. Eine solche rote LED hätte weniger Überlapp mit der ersten Lumineszenzstrahlung und würde sich dadurch effizienter und kostengünstiger integrieren lassen. Erfindungsgemäß wird auf diese effiziente und kostengünstige Integration verzichtet und stattdessen in Kauf genommen, dass viel Lichtleistung des zweiten festkörperbasierten Beleuchtungsmoduls als Verlust vorliegt, um das Licht der zweiten Farbe mit relativ hoher Intensität und stabiler Farbe und Helligkeit bereitstellen zu können.

Dies ist insbesondere von Vorteil, wenn mehrere solche Beleuchtungsvorrichtungen für mehrere Projektoren vorgesehen werden, die zusammen in überlappender Art und Weise ein größeres Bild darstellen. In diesem Fall würden Farbabweichungen der unterschiedlichen Projektoren sehr leicht als störend wahrgenommen werden.

Ferner weist die zweite Lumineszenzstrahlung noch in vorteilhafter Weise einen höheren Anteil im infraroten Wellenlängenbereich (insbesondere im nahen infraroten Wellenlängenberiech) auf als die erste Lumineszenzstrahlung. Die Filtereinheit kann insbesondere so ausgebildet sein, dass sie diesen Infrarotanteil der zweiten Lumineszenzstrahlung weiterleitet. Dieser kann dann zu einer Bilddarstellung verwendet werden, insbesondere für Nachtsichtsimulationen bzw. -projektionen.

Bei Licht der ersten oder zweiten Farbe handelt es sich bevorzugt um unterschiedliche Farben. Insbesondere kann es sich dabei um sogenannte Primärfarben handeln, wie z.B. rot und grün.

Darüber hinaus sind die festkörperbasierten Beleuchtungsmodule stabiler (insbesondere Farbort und Leistung) bezüglich thermischer Einflüsse, Lastwechsel und Pulsbetrieb. Auch ist keine aktive Regelung der festkörperbasierten Beleuchtungsmodule erforderlich. Damit werden Teile (beispielsweise Sensoren) eingespart. Es gibt weniger Ausfälle und die Herstellungskosten sind geringer. Ferner wird der Nutzungsgrad des Lichtmodulators erhöht, da keine Zeit für die Messung der Ausgangsleistung benötigt wird.

Bei den festkörperbasierten Beleuchtungsmodulen kann das erste bzw. zweite Lumineszenzmaterial insbesondere jeweils ein Farbstoff-dotierter Festkörperstab sein. Die erste und/oder zweite Festkörperlichtquelle kann insbesondere eine oder mehrere LEDs, eine oder mehrere blaue LEDs und besonders bevorzugt eine oder mehrere blaue Hochleistungs-LEDs aufweisen. Die Farbstoff-dotierten Festkörperstäbe können dann ein relativ breites, in den grünen bis roten Spektralbereich verschobenes Spektrum emittieren, wobei das Maximum bei einer grünen Wellenlänge oder bei einer gelben Wellenlänge liegen kann.

Die festkörperbasierten Beleuchtungsmodule können beispielsweise von der Firma Signify (ehemals Philips Lighting) bezogen werden. Insbesondere zeichnen sich die festkörperbasierten Beleuchtungsmodule durch eine hohe Lebensdauer und eine langsame Alterung aus. Auch ist die Lichtleistung quasi sofort verfügbar. Es wird keine signifikante Aufwärmzeit im Vergleich zu bisher bekannten Quecksilber-Hochdrucklampen benötigt.

Ferner sind die festkörperbasierten Beleuchtungsmodule wartungsärmer und es kommt zu geringeren Ausfallzeiten. Insbesondere besteht nicht die Gefahr von Lampenplatzern und die Verwendung von Quecksilber ist nicht mehr notwendig, was umweltschonender ist.

Die festkörperbasierten Beleuchtungsmodule können lageunabhängig betrieben werden, was zu einer flexibler einsetzbaren Beleuchtungsvorrichtung führt.

Insbesondere kann das erste oder zweite festkörperbasierte Beleuchtungsmodul zur Erzeugung der Lumineszenzstrahlung frei von bewegten Teilen sein. Es wird somit beispielsweise kein Farbrad mehr benötigt, wie dies bisher der Fall war, um die gewünschte Farbe bzw. die gewünschten Farben zu erzeugen. Somit ist eine gute Haltbarkeit gewährleistet.

Die Filtereinheit kann einen dichroitischen Strahlvereiniger umfassen, der gleichzeitig Teil der Überlagerungseinheit ist. Andere Arten der Strahlvereinigung sind natürlich auch möglich, wie z.B. diffraktiv (durch Gitter) und/oder refraktiv (durch Prismen).

Die erste und/oder zweite Festkörperlichtquelle kann eine LED enthalten. Insbesondere kann die erste und/oder zweite Festkörperlichtquelle die Anregungsstrahlung mit einer Wellenlänge aus dem Bereich von 200 bis 490 nm abgeben.

Ferner kann der Beleuchtungsstrahlengang einen Lichtmischstab oder Integrator aufweisen, durch den die erste und die zweite Lumineszenzstrahlung läuft. Das Ende des Lichtmischstabes kann das Ende des Beleuchtungsstrahlengangs bilden.

Ferner kann die Beleuchtungsvorrichtung ein drittes Beleuchtungsmodul aufweisen, das eine dritte Strahlung abgibt, wobei die dritte Strahlung mittels der Überlagerungseinheit in den Beleuchtungsstrahlengang eingekoppelt wird. Das dritte Beleuchtungsmodul kann z.B. eine LED aufweisen. Die dritte Strahlung kann Licht einer dritten Farbe (z.B. einer dritten Primärfarbe) sein, die verschieden ist zur ersten Farbe und zur zweiten Farbe. Insbesondere kann die dritte Strahlung eine Wellenlänge im blauen Wellenlängenbereich des sichtbaren Lichtes aufweisen.

Die Beleuchtungsvorrichtung kann so ausgebildet sein, dass ein paraxialer Fokus der dritten Strahlung im Lichtmischstab liegt und von einem paraxialen Fokus der ersten und/oder zweiten Lumineszenzstrahlung beabstandet ist. Insbesondere können die paraxialen Foki der ersten und zweiten Lumineszenzstrahlung voneinander beabstandet sein und alle innerhalb des Lichtmischstabs liegen.

Das erste festkörperbasierte Beleuchtungsmodul kann zwei (bevorzugt gleich aufgebaute) Beleuchtungsteilmodule umfassen, deren abgegebene Teilmodul-Lumineszenzstrahlungen zu einem ersten Lumineszenzstrahlenbündel kombiniert werden, aus dem die Filtereinheit das Licht der ersten Farbe filtert.

Die beiden Teilmodul-Lumineszenzstrahlungen können benachbart verlaufen und zusammen auf ein Filterelement der Filtereinheit treffen, das das Licht der ersten Farbe herausfiltert. Alternativ ist es möglich, dass die Teilmodul-Lumineszenzstrahlungen jeweils auf separate Filterelemente der Filtereinheit treffen, wobei die Filterelemente daraus jeweils Licht der ersten Farbe herausfiltern und das Licht der ersten Farbe danach zu einem gemeinsamen Strahlenbündel der ersten Farbe kombinieren.

In gleicher Weise kann das zweite festkörperbasierte Beleuchtungsmodul zwei (bevorzugt gleich aufgebaute) Beleuchtungsteilmodule umfassen, deren abgegebene Teilmodul-Lumineszenzstrahlungen zu einem zweiten Lumineszenzstrahlenbündel kombiniert werden, aus dem die Filtereinheit das Licht der zweiten Farbe filtert.

Dabei können die beiden Teilmodul-Lumineszenzstrahlungen benachbart verlaufen und zusammen auf ein Filterelement der Filtereinheit treffen, das das Licht der zweiten Farbe herausfiltert. Alternativ können die Teilmodul-Lumineszenzstrahlungen jeweils auf separate Filterelemente der Filtereinheit treffen, wobei die Filterelemente daraus jeweils Licht der zweiten Farbe herausfiltern und das Licht der zweiten Farbe danach zu einem gemeinsamen Strahlenbündel der zweiten Farbe kombinieren.

Ferner kann das dritte Beleuchtungsmodul zwei Beleuchtungsteilmodule aufweisen, deren abgegebene dritte Strahlungen zu einem dritten Strahlenbündel kombiniert werden. Falls notwendig und/oder gewünscht, kann aus dem dritten Strahlenbündel das Licht einer dritten Farbe gefiltert werden.

Es ist wiederum möglich, dass die dritten Strahlenbündel benachbart verlaufen und zusammen in den Beleuchtungsstrahlengang eingekoppelt werden. Alternativ ist es möglich, dass die dritten Strahlenbündel an unterschiedlichen Orten in den Strahlengang eingekoppelt werden. Bei einer Einkopplung kann, sofern gewünscht, auch eine Filterung durchgeführt werden.

Die Einkopplung der von den Beleuchtungsteilmodulen erzeugten Strahlenbündel kann wellenlängenabhängig über entsprechende wellenlängenabhängige Strahlvereinigungselemente (wie z.B. dichroitische Strahlvereiniger, Gitter, Prismen, etc.) und/oder über eine geometrische Strahlvereinigung erfolgen. So kann die Beleuchtungsvorrichtung beispielsweise eine erste und eine zweite Lichtquelleneinheit aufweisen, die jeweils zeitsequenziell Licht einer ersten und einer zweiten Farbe (bevorzugt noch einer dritten Farbe) in einem Ausgangsstrahlenbündel abgeben. Die beiden Ausgangsstrahlenbündel werden dann geometrisch zu einem Strahlbündel mit größerem Querschnitt kombiniert und in den Beleuchtungsstrahlengang eingekoppelt. Die Lichtquelleneinheiten können jeweils ein erstes und zweites festkörperbasiertes Beleuchtungsteilmodul aufweisen, das grundsätzlich gleich aufgebaut sein kann wie das erste bzw. das zweite festkörperbasierte Beleuchtungsmodul.

Es wird ferner ein Projektor mit einem Lichtmodulator und einer erfindungsgemäßen Beleuchtungsvorrichtung (einschließlich aller oben genannten Weiterbildungen) bereitgestellt. Ein solcher Projektor kann beispielsweise in der Flugsimulation (z.B. in einem Flugsimulator), als Planetariumsprojektor oder als sonstiger Projektor eingesetzt werden.

Der Lichtmodulator ist insbesondere ein flächiger Lichtmodulator und kann z.B. als Kippspiegelmatrix, LCD-Modul oder LCoS-Modul ausgebildet sein. Des Weiteren kann der Projektor eine Steuereinheit zur Steuerung des Modulators und der Beleuchtungsmodule sowie eine Projektionsoptik aufweisen, die das mittels des Lichtmodulators erzeugte Bild auf eine Projektionsfläche projiziert.

Der Projektor ist insbesondere so ausgebildet, dass die verschiedenen Teilbilder zeitsequentiell erzeugt werden. Dabei werden die Teilbilder so schnell hintereinander erzeugt, dass ein Benutzer sie nicht mehr einzeln auflösen kann, sondern nur noch eine Überlagerung der Teilbilder als mehrfarbiges Bild wahrnimmt. Dazu kann die Steuereinheit die Beleuchtungsmodule so ansteuern, dass sie zeitsequenziell an- und ausgeschaltet (ein Umschalten im kHz-Bereich ist möglich) werden. Damit kann der Modulator zeitsequenziell mit unterschiedlichen Farben beleuchtet werden, wodurch Farbteilbilder erzeugt werden können, die der Benutzer dann nur noch in Überlagerung wahrnehmen kann. Natürlich ist es auch möglich, sofern dies z.B. für eine höhere Lichtleistung gewünscht ist, für gewisse Phasen mindestens zwei Beleuchtungsmodule gleichzeitig einzuschalten.

Der Projektor kann zwei hintereinander angeordnete Lichtmodulatoren aufweisen. Insbesondere ist in diesem Fall eine Modulatoroptik vorgesehen, die den ersten Lichtmodulator auf den zweiten Lichtmodulator abbildet. Die Modulatoroptik kann insbesondere als 1:1-Optik ausgebildet sein. Durch das Vorsehen von zwei hintereinander geschalteten Lichtmodulatoren wird der Maximalkontrast des Projektors erhöht.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine schematische Darstellung eines ersten Ausführungsbeispiels des erfindungsge-mäßen Beleuchtungsmoduls 1 in einem erfindungsgemäßen Projektor 2;
- Fig. 2: eine schematische Darstellung des ersten und zweiten festkörperbasierten Beleuch-tungsmoduls 4, 5;
- Fig. 3: eine schematische Darstellung der Spektren des ersten und zweiten Beleuchtungsmoduls 4, 5;
- Fig. 4: eine schematische Darstellung der Spektren im Bereich der Eintrittsfläche 51 des Integrators 18;
- Fig. 5: eine Draufsicht des Filterrades 22 des Beleuchtungsmoduls 1 von Fig. 1;
- Fig. 6: ein weiteres Ausführungsbeispiel des erfindungsgemäßen Beleuchtungsmoduls 1;
- Fig. 7: eine vergrößerte Detailansicht des dritten und vierten Beleuchtungsteilmoduls 32, 33;
- Fig. 8: eine vergrößerte Detailansicht einer Abwandlung des dritten und vierten Beleuchtungsteilmoduls, 32, 33;
- Fig. 9: eine Darstellung eines weiteren Ausführungsbeispiels des erfindungsgemäßen Projektors 2 zusammen mit dem erfindungsgemäßen Beleuchtungsmodul 1;
- Fig. 10: eine Darstellung eines weiteren Ausführungsbeispiels des erfindungsgemäßen Projektors 2 mit dem erfindungsgemäßen Beleuchtungsmodul 1;
- Fig. 11: eine Darstellung eines weiteren Ausführungsbeispiels des erfindungsgemäßen Projektors 2 mit dem erfindungsgemäßen Beleuchtungsmodul 1;
- Fig. 12: eine Darstellung eines weiteren Ausführungsbeispiels des erfindungsgemäßen Projektors 2 mit dem erfindungsgemäßen Beleuchtungsmodul 1;
- Fig. 13: eine Darstellung zur Erläuterung des paraxialen Fokus des dritten Beleuchtungsmoduls 6, und
- Fig. 14: eine schematische Darstellung des paraxialen Fokus des ersten und/oder zweiten Beleuchtungsmoduls 4, 5.

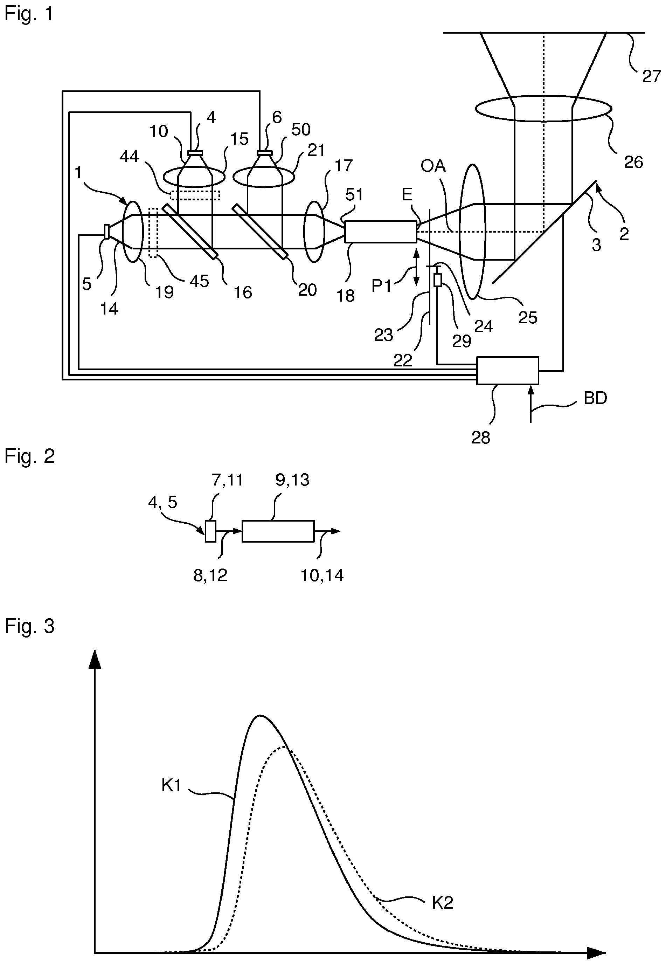

Bei der in Fig. 1 gezeigten Ausführungsform ist die erfindungsgemäße Beleuchtungsvorrichtung 1 in einem erfindungsgemäßen Projektor 2 vorgesehen, der einen Lichtmodulator 3 (z.B. eine Kippspiegelmatrix) aufweist.

Die Beleuchtungsvorrichtung 1 umfasst ein erstes festkörperbasiertes Beleuchtungsmodul 4, ein zweites festkörperbasiertes Beleuchtungsmodul 5 sowie ein drittes Beleuchtungsmodul 6.

Wie schematisch in Fig. 2 angedeutet ist, umfasst das erste festkörperbasierte Beleuchtungsmodul 4 eine erste Festkörperlichtquelle 7, die z.B. als LED (beispielsweise eine blaue Hochleistungs-LED), als Laser-Diode oder als organische LED ausgebildet ist und erste Anregungsstrahlung 8 abgibt. Ferner umfasst das erste festkörperbasierte Beleuchtungsmodul 4 ein erstes Lumineszenzmaterial 9 (z.B. Farbstoff-dotierter Festkörperstab), auf das die erste Anregungsstrahlung 8 trifft, wobei eine erste Lumineszenzstrahlung 10 erzeugt und abgegeben wird. Die erste Festkörperlichtquelle 7 kann die erste Anregungsstrahlung 8 z.B. mit einer Wellenlänge aus dem Bereich von 200 bis 490 nm abgeben. Die erste Lumineszenzstrahlung 10 weist ein erstes Spektrum auf, wobei dessen Maximum bei der grünen Wellenlänge von 560 nm liegt, wie schematisch in Fig. 3 mit der Kurve K1 mit durchgezogener Linie dargestellt ist. Dabei ist in Fig. 3 die spektrale Leistungsdichte (entlang der Hochachse) in Abhängigkeit der emittierten Wellenlänge (entlang der Querachse) aufgetragen.

Das erste festkörperbasierte Beleuchtungsmodul 4 kann mehrere erste Festkörperlichtquellen 7 aufweisen, deren Anregungsstrahlungen 8 zum Erzeugen der Lumineszenzstrahlung 10 genutzt werden.

Das zweite festkörperbasierte Beleuchtungsmodul 5 ist grundsätzlich gleich aufgebaut wie das erste festkörperbasierte Beleuchtungsmodul 4, so dass wiederum auf die schematische Darstellung in Fig. 2 verwiesen werden kann. So umfasst das zweite festkörperbasierte Beleuchtungsmodul 5 eine zweite Festkörperlichtquelle 11, die eine LED, eine Laser-Diode oder eine organische LED enthalten kann und eine zweite Anregungsstrahlung 12 mit einer Wellenlänge aus dem Bereich von z.B. 200 bis 490 nm abgibt. Ferner umfasst das zweite festkörperbasierte Beleuchtungsmodul 5 ein zweites Lumineszenzmaterial 13, das mit der zweiten Anregungsstrahlung 12 beaufschlagt wird und als Folge die zweite Lumineszenzstrahlung 14 abgibt, dessen zweites Spektrum in Fig. 3 als Kurve K2 mit gestrichelter Linie eingezeichnet ist. Das zweite Spektrum weist sein Maximum bei der gelben Wellenlänge von 569 nm auf.

Wie der Darstellung in Fig. 3 entnommen werden kann, liegt ein deutlicher spektraler Überlappbereich der beiden unterschiedlichen Spektren K1 und K2 vor. Jedoch ist auch erkennbar, dass die zweite Lumineszenzstrahlung 14 im Vergleich zur ersten Lumineszenzstrahlung 10 eine höhere Emission im roten Spektralbereich aufweist.

Die erste Lumineszenzstrahlung 10 des ersten festkörperbasierten Beleuchtungsmoduls 4 läuft durch eine erste Kondensoroptik 15, trifft auf einen ersten dichroitischen Strahlvereiniger 16, der von der kollimierten ersten Lumineszenzstrahlung 10 den gewünschten grünen Anteil zu einem zweiten dichroitischen Strahlvereiniger 20 hin umlenkt, von dem es zu einer Fokussieroptik 17 transmittiert wird, die die Strahlung in einen Integrator 18 (der z.B. als Lichtmischstab ausgebildet sein kann), fokussiert.

Die zweite Lumineszenzstrahlung 14 läuft durch eine zweite Kondensoroptik 19 und den ersten dichroitischen Strahlvereiniger 16, der davon nur den gewünschten roten Anteil der zweiten Lumineszenzstrahlung 14 transmittiert. Dieser rote Anteil der zweiten Lumineszenzstrahlung 14 läuft durch den zweiten dichroitischen Strahlvereiniger 20 und wird dann von der Fokussieroptik 17 in den Integrator 18 fokussiert.

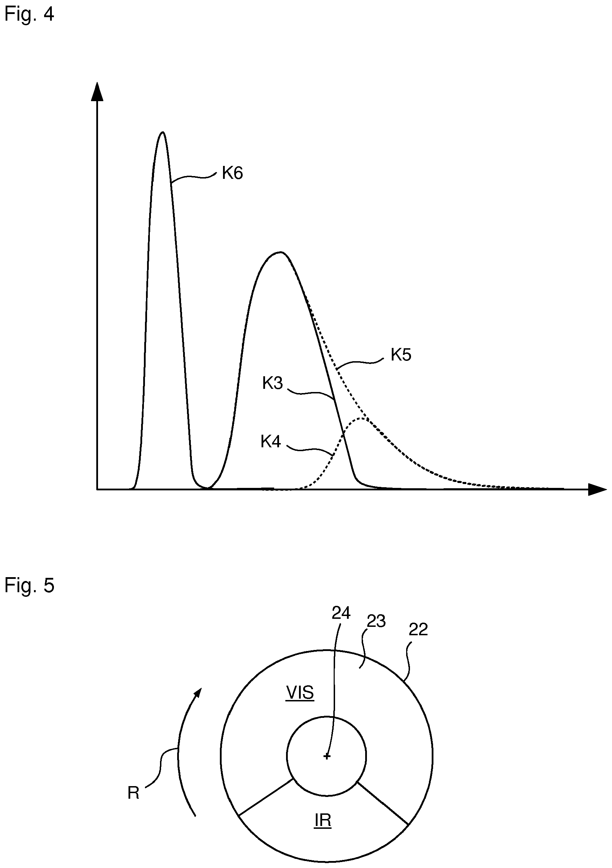

In Fig. 4 sind die effektiven Spektren nach Strahlvereinigung (z.B. bei Eintritt in den Lichtmischstab 9) in gleicher Weise wie in Fig. 3 dargestellt, wobei die Kurve K3 das verbleibende Spektrum der ersten Lumineszenzstrahlung 10 nach Umlenkung durch den ersten Strahlvereiniger 16 bzw. beim Eintritt in den Integrator 18, die Kurve K4 das verbleibende Spektrum der zweiten Lumineszenzstrahlung 14 nach Durchlaufen des ersten Strahlvereinigers bzw. beim Eintritt in den Integrator 18 und die Kurve K5 das Summenspektrum der Kurven K3 und K4 zeigt. Zwar wird von der Lumineszenzstrahlung 14 des zweiten Beleuchtungsmoduls 5 ein großer Teil des Lichtstromes (nämlich der grüne Spektralbereich) nicht genutzt. Jedoch ist das verbleibende rote Spektrum (Kurve K4) dennoch vorteilhaft.

Das dritte Beleuchtungsmodul 6 gibt eine dritte Strahlung 50 mit blauer Wellenlänge ab, die durch eine dritte Kondensoroptik 21 und danach vom zweiten dichroitischen Strahlvereiniger 20 zur Fokussieroptik 17 hin umgelenkt und von dieser in den Integrator 18 fokussiert wird. Das Spektrum der dritten Strahlung 50 nach Umlenkung durch den zweiten Strahlvereiniger 20 bzw. beim Eintritt in den Integrator 18 ist in Fig. 4 schematisch als Kurve K6 dargestellt.

Somit sind nach dem zweiten Strahlvereiniger 20 die erste bis dritte Strahlung 10, 14, 50 überlagert und durchlaufen alle die Fokussieroptik 17 und den Integrator 18, aus dessen Ende E sie austreten. Der Strahlengang vom zweiten Strahlvereiniger 20 bis zum Ende E kann daher auch als Beleuchtungsstrahlengang bezeichnet werden. Natürlich kann der Beleuchtungsstrahlengang auch schon am ersten Strahlvereiniger 16 beginnen, da der erste Strahlvereiniger 16 die erste und zweite Lumineszenzstrahlung 10, 14 überlagert.

Dem Integrator 18 ist ein Filterrad 22 nachgeordnet, das eine Filterfläche 23 aufweist. Die Filterfläche 23 kann beispielsweise ringförmig ausgebildet sein, wie in der Draufsicht in Fig. 5 ersichtlich ist, und weist zwei in Drehrichtung R nebeneinanderliegende Flächensegmente auf, die als erstes Flächensegement VIS und als zweites Flächensegment IR bezeichnet werden können. Das erste Flächensegment VIS transmittert Licht aus dem sichtbaren Wellenlängenbereich und Strahlung aus dem Infrarotbereich. Das zweite Flächensegment transmittiert nur Strahlung aus dem Infrarotbereich und kein Licht aus dem sichtbaren Wellenlängenbereich.

Die Filterfläche 23 des Filterrades 22 ist senkrecht oder unter einem Winkel von ungleich 90° zur optischen Achse OA der Beleuchtungsvorrichtung 1 so angeordnet, dass stets nur ein Teil der Filterfläche 23 in den Beleuchtungsstrahlengang einsteht. Das Filterrad 22 ist so ausgebildet, dass die Filterfläche 23 um eine Achse 24 drehbar ist, wobei die Achse 24 sich parallel zur optischen Achse OA erstrecken kann oder einen Winkel von größer als 0° (und somit nicht mehr parallel zur optischen Achse OA) zur optischen Achse OA aufweisen kann.

Der Projektor 2 umfasst ferner eine dem Integrator 18 (und ggf. dem Filterrad 22, sofern dies in dem Strahlengang positioniert ist) nachgeordnete Beleuchtungsoptik 25, die das durch das vom Integrator 18 kommende Licht so auf den Lichtmodulator 3 richtet, dass dieser möglichst gleichmäßig beleuchtet wird.

Der Projektor 2 weist eine Steuereinheit 28 auf, die den Lichtmodulator 3 und die drei Beleuchtungsmodule 4-6 (sowie gegebenenfalls einen Antrieb 29 des Filterrades 22) basierend auf zugeführten Bilddaten BD so ansteuert, dass die gewünschten Bilder projiziert werden. Dazu können die drei Beleuchtungsmodule 4-6 so angesteuert werden, dass sie zeitlich nacheinander ein- und ausgeschaltet werden, um den Lichtmodulator 3 zeitlich nacheinander mit rotem, grünem und blauen Licht zu beleuchten. Der Lichtmodulator 3 moduliert das Licht in bekannter Art und Weise, so dass rote, grüne und blaue Farbteilbilder erzeugt werden und das zur Bilddarstellung benutzte Licht der Farbteilbilder (sogenanntes Ein-Licht) wird über eine Projektionsoptik 26 auf eine Projektionsfläche 27 projiziert, um dort ein darzustellendes Bild zu erzeugen. Die Beleuchtungsmodule 4-6 werden dabei mittels der Steuereinheit 28 so angesteuert, dass die mittels des Modulators 3 erzeugten roten, grünen und blauen Farbteilbilder so schnell hintereinander erzeugt und mittels der Projektionsoptik 26 auf der Projektionsfläche 27 dargestellt werden, dass ein Betrachter sie zeitlich nicht auflösen kann und somit die Überlagerung als mehrfarbiges Bild wahrnimmt.

Für das blaue Farbteilbild wird die dritte Strahlung 50 des dritten Beleuchtungsmoduls 6 genutzt, das z.B. eine LED aufweisen kann. Natürlich kann auch das dritte Beleuchtungsmodul 6 z.B. als festkörperbasiertes Beleuchtungsmodul ausgebildet sein. Für das grüne Farbteilbild wird der grüne Anteil der ersten Lumineszenzstrahlung 10 genutzt. Für das rote Farbteilbild werden die entsprechenden Anteile der zweiten Lumineszenzstrahlung 14 genutzt.

Das Filterrad 22 dient z.B. zur Erzeugung von Infrarotbildern bei Flugsimulatoren und kann aus dem Strahlengang herausbewegt werden, wie durch den Doppelpfeil P1 angedeutet ist. So kann die erfindungsgemäße Beleuchtungsvorrichtung 1 bzw. der erfindungsgemäße Projektor 2 in einem Flugsimulator genutzt werden, um Nachsichtbedingungen unter der Verwendung eines Nachtsichtgerätes trainieren zu können. Dazu kann z.B. der Infrarotanteil der ersten und/oder zweiten Lumineszenzstrahlung 10, 14 genutzt werden, wobei das Filterrad 22 in dem Strahlengang hineinsteht, wie in Fig. 1 schematisch dargestellt ist. Bevorzugt können durch nicht eingezeichnete Filter der Infrarotanteil der Beleuchtungsmodule 4-6, deren Infrarotanteil nicht zur Erzeugung der Infrarotbilder genutzt werden soll, geblockt werden. Aufgrund des sich drehenden Filterrades können somit beispielsweise gleichzeitig ein gewünschtes Infrarotbild und ein Bild mit Licht aus dem sichtbaren Wellenlängenbereich erzeugt und projiziert werden. Somit können gewünschte Infrarotbilder erzeugt werden, die ein Benutzer des Flugsimulators mit seinem Nachtsichtgerät wahrnehmen kann. Mit einem solchen Flugsimulator kann z.B. das Fliegen und Bedienen eines Flugzeuges oder eines Hubschraubers trainiert werden.

Wenn keine Infrarotbilder erzeugt werden sollen, kann das Filterrad 22 aus dem Strahlengang hinausbewegt werden. In diesem Fall trifft das den Integrator 18 verlassende Licht unmittelbar auf die Beleuchtungsoptik 25.

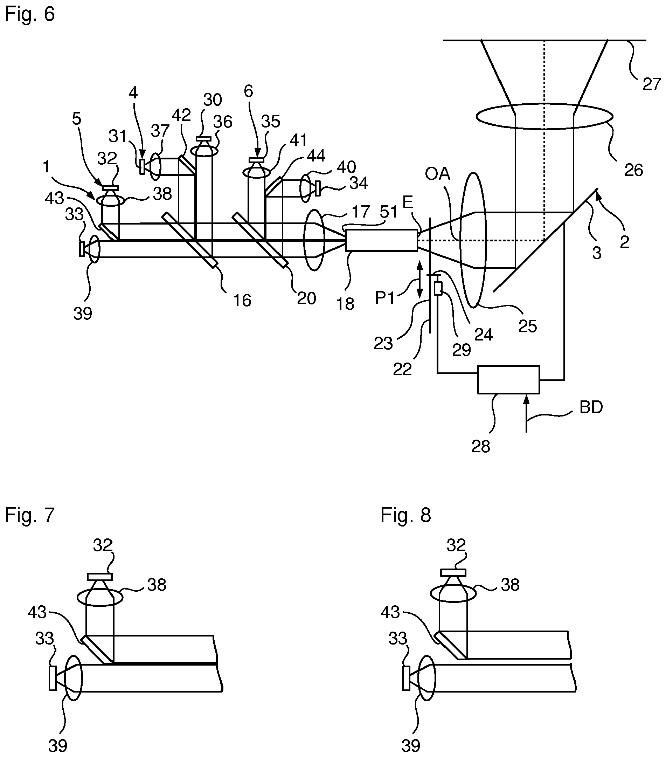

In Fig. 6 ist eine Abwandlung der Ausführungsform von Fig. 1 gezeigt. Bei dieser Abwandlung weisen die in Fig. 6 dargestellten Beleuchtungsmodule 4 - 6 beispielsweise einen geringeren Lichtleitwert auf als in Fig. 1, so dass für das erste, zweite und dritte Beleuchtungsmodul 4 - 6 jeweils zwei separate Beleuchtungsteilmodule vorgesehen sind. So umfasst das erste festkörperbasierte Beleuchtungsmodul 4 ein erstes und ein zweites festkörperbasiertes Beleuchtungsteilmodul 30, 31. Das zweite festkörperbasierte Beleuchtungsmodul 5 umfasst ein drittes und viertes festkörperbasiertes Beleuchtungsteilmodul 32, 33 und das dritte Beleuchtungsmodul 6 umfasst ein fünftes und sechstes Beleuchtungsteilmodul 34, 35.

Die Beleuchtungsteilmodule 30-35 können wiederum durch die Steuereinheit 28 angesteuert werden und zur Vereinfachung der Darstellung sind die entsprechenden Verbindungsleitungen nicht eingezeichnet.

Das erste bis vierte Beleuchtungsteilmodul 30 - 33 sind im Prinzip gleich aufgebaut wie das erste oder zweite festkörperbasierte Beleuchtungsmodul 4, 5 gemäß Figuren 1 und 2. Das fünfte und sechste Beleuchtungsteilmodul 34, 35 sind grundsätzlich gleich aufgebaut wie das dritte Beleuchtungsmodul gemäß Fig. 1. Jedes Beleuchtungsteilmodul 30 - 35 umfasst eine Kollimatoroptik 36 bis 41 und es sind drei Umlenkelemente 42 bis 44 vorgesehen, um die entsprechende Strahlung des entsprechenden Beleuchtungsteilmoduls 30, 33 und 34 zu dem entsprechenden dichroitischen Strahlvereiniger 16, 20 zu lenken, wie in Fig. 6 angedeutet ist. Das erste und zweite Beleuchtungsteilmodul 30, 31 geben jeweils eine Lumineszenzstrahlung gemäß der Kurve K1 in Fig. 3 ab. Das dritte und vierte Beleuchtungsteilmodul 32 und 33 geben jeweils einer Lumineszenzstrahlung entsprechende Kurve K2 in Fig. 3 ab. Ferner geben das vierte und fünfte Beleuchtungsteilmodul 34 und 35 die gleiche Strahlung im blauen Wellenlängenbereich wie das dritte Beleuchtungsmodul 6 ab.

In einer nicht gezeigten Abwandlung ist statt des fünften und sechsten Beleuchtungsteilmoduls 34, 35 das dritte Beleuchtungsteilmodul 6 gemäß Fig. 1 vorgesehen.

Wie in Fig. 6 und in der vergrößerten Ansicht zur Darstellung in Fig. 7 für das dritte und vierte Beleuchtungsteilmodul 32, 33 dargestellt ist, sind die Strahlen der Beleuchtungsteilmodule 32 und 33 so eng wie möglich aneinander gelegt. Es kann jedoch auch ein endlicher Abstand vorgesehen sein, wie dies in Fig. 8 angedeutet ist. Bei dem in Fig. 6 beschriebenen Ausführungsbeispiel geben das erste und zweite Beleuchtungsteilmodul 30, 31, das dritte Beleuchtungsteilmodul 32, 33 sowie das fünfte und sechste Beleuchtungsteilmodul 34 und 35 jeweils Strahlung mit dem gleichen Spektrum ab. Es werden also Lichtquellen mit geringerem Lichtleitwert aber gleichem Spektrum genutzt, um einen Strahl mit größerem Durchmesser zu erzeugen. Diese Strahlen mit größerem Durchmesser werden dann mittels der Strahlvereiniger 16, 20 überlagert. Es wird somit eine wellenlängenabhängige Überlagerung durchgeführt.

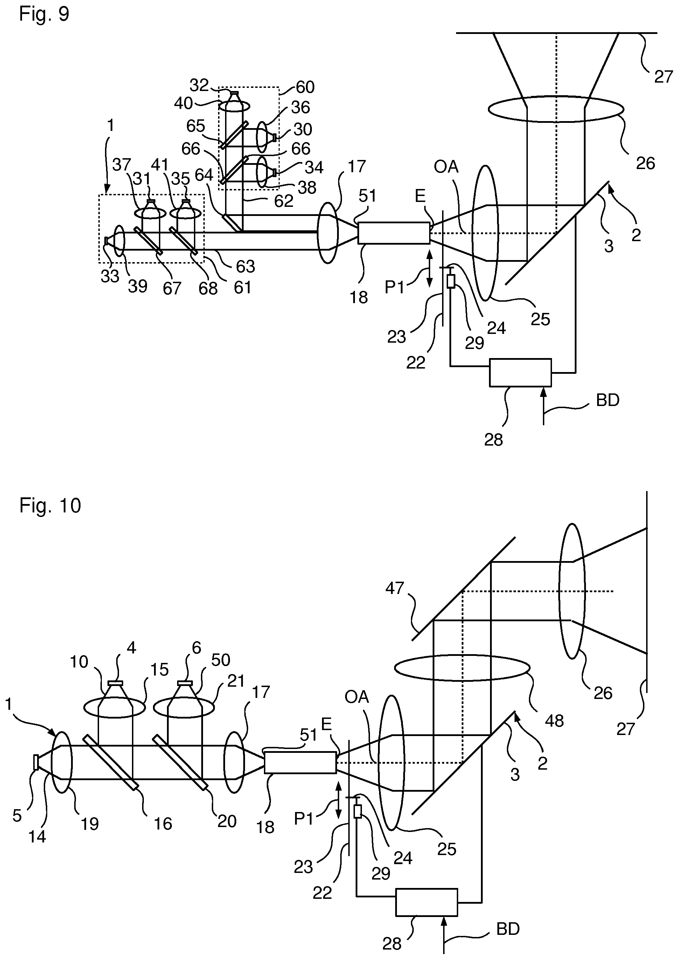

Alternativ ist es möglich, eine geometrische Überlagerung bzw. Strahlzusammenführung durchzuführen, wie dies bei dem Ausführungsbeispiel gemäß Fig. 9 gezeigt ist. Bei diesem Ausführungsbeispiel umfasst die erfindungsgemäße Beleuchtungsvorrichtung 1 zwei Lichtquelleneinheiten 60, 61, die gleich ausgebildet sein können und zeitsequenziell rotes, grünes und blaues Licht als Ausgangsstrahlenbündel 62, 63 abgeben können. Die Ausgangsstrahlenbündel 62, 63 werden mittels eines Umlenkspiegels 64 geometrisch zu einem Strahlenbündel zusammengesetzt überlagert, das auf die Fokussieroptik 17 trifft und von dieser in den Integrator 18 fokussiert wird.

Die erste Lichtquelleneinheit 60 kann das erste, dritte und fünfte Beleuchtungsteilmodul 30, 32, 34 zusammen mit den entsprechenden Kollimatoroptiken 36, 38 und 40 aufweisen. Ferner enthält die erste Lichtquelleneinheit 60 einen ersten dichroitischen Strahlvereiniger 65 und einen zweiten dichroitischen Strahlvereiniger 66, die in gleicher Weise ausgebildet sein können wie die dichroitischen Strahlvereiniger 16 und 20.

Die zweite Lichtquelleneinheit 61 kann das zweite, vierte und sechste Beleuchtungsteilmodul 31, 33 und 35 zusammen mit den entsprechenden Kollimatoroptiken 37, 39 und 41 sowie einen dritten und vierten dichroitischen Strahlvereiniger 67, 68 (die in gleicher Weise ausgebildet sein können wie die dichroitischen Strahlvereiniger 16, 20) aufweisen.

Somit umfasst das erste Beleuchtungsmodul 4 das erste und zweite Beleuchtungsteilmodul 30, 31, umfasst das zweite Beleuchtungsmodul 5 das dritte und vierte Beleuchtungsteilmodul 32 und 33 und umfasst das dritte Beleuchtungsmodul 6 das fünfte und sechste Beleuchtungsteilmodul 34 und 35.

Die Beleuchtungsteilmodule 30-35 können wiederum durch die Steuereinheit 28 angesteuert werden und zur Vereinfachung der Darstellung sind die entsprechenden Verbindungsleitungen nicht eingezeichnet.

In einer weiteren Abwandlung können die breiten Spektren des ersten und/oder zweiten festkörperbasierten Beleuchtungsmoduls 4, 5 durch die in Fig. 1 gestrichelt dargestellten Optikeinheiten 45, 46 manipuliert bzw. verändert werden. Die Optikeinheiten 45, 46 können z.B. Filter, Prismen, Gitter, etc. aufweisen, die beispielsweise absorptiv oder dichroitisch sind. Solche Optikeinheiten 45, 46 können bei allen anderen beschriebenen Ausführungsbeispielen vorgesehen werden.

In Fig. 10 ist ein weiteres Ausführungsbeispiel des erfindungsgemäßen Projektors 2 gezeigt, der einen verbesserten Kontrast aufweist, da dem Lichtmodulator 3 ein weiterer Lichtmodulator 47 nachgeordnet ist. Zwischen den beiden Lichtmodulatoren 3 und 47 ist bevorzugt eine Abbildungsoptik 48 angeordnet, die den Lichtmodulator 3 auf den weiteren Lichtmodulator 47 abbildet. Die Abbildungsoptik 48 kann beispielsweise eine 1:1-Abbildungsoptik sein.

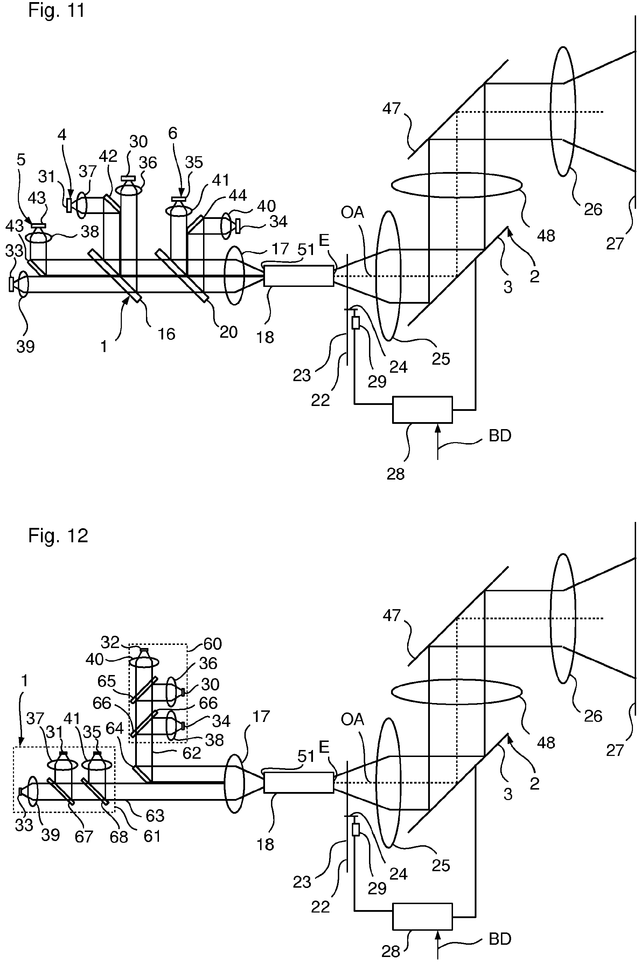

In Fig. 11 ist ein Ausführungsbeispiel gezeigt, bei dem die Anordnung mit den zwei hintereinander angeordneten Lichtmodulatoren 3 und 47 mit der Beleuchtungsvorrichtung 1 gemäß Fig. 6 kombiniert ist. Ein weiteres Ausführungsbeispiel ist in Fig. 12 gezeigt, bei dem die Anordnung mit den zwei hintereinander angeordneten Lichtmodulatoren 3 und 47 mit der Beleuchtungsvorrichtung 1 gemäß Fig. 9 kombiniert ist.

Bei den Ausführungsbeispielen von Fig. 10-12 können die Beleuchtungsmodule 4-6 sowie die Beleuchtungsteilmodule 30-35 wiederum durch die Steuereinheit 28 angesteuert werden, wobei zur Vereinfachung der Darstellung die entsprechenden Verbindungsleitungen nicht eingezeichnet sind.

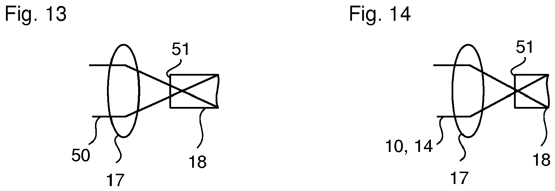

Die erste bis dritte Kondensoroptik 15, 19, 21 kann in Verbindung mit der Fokussieroptik 17 so ausgebildet sein, dass die erste und zweite Lumineszenzstrahlung 10, 14 sowie die dritte Strahlung 50 ihren paraxialen Fokus an derselben Stelle innerhalb des Lichtmischstabs 18 oder genau an der Eintrittsfläche 51 des Lichtmischstabs 18 haben. Es kann jedoch vorteilhaft sein, wenn die paraxialen Foki der ersten und zweiten Lumineszenzstrahlung 10, 14 einerseits und der paraxiale Fokus der dritten Strahlung 50 andererseits an unterschiedlichen axialen Positionen (also entlang der optischen Achse OA) liegen, wie schematisch in Fig. 13 und 14 dargestellt ist. Dabei zeigt Fig. 13 den paraxialen Fokus der dritten Strahlung 50, der weiter von der Eintrittsfläche 51 des Lichtmischstabs bzw. Integrators 18 beabstandet ist als der in Fig. 14 dargestellte paraxiale Fokus der ersten und zweiten Lumineszenzstrahlung 10, 14. Hierbei ist angenommen, dass die paraxialen Foki der ersten und zweiten Lumineszenzstrahlung 10, 14 zusammenfallen. Es ist jedoch auch möglich, dass die paraxialen Foki der ersten und zweiten Lumineszenzstrahlung 10, 14 nicht zusammenfallen, sondern ebenfalls voneinander beabstandet sind, wobei beide paraxiale Foki innerhalb des Integrators 8 positioniert sind. Dabei kann der Abstand der paraxialen Foki im mm-Bereich liegen. So kann beispielsweise der par-axiale Fokus der dritten Strahlung 50 um 2 mm von der Eintrittsfläche 51 beabstandet sein. Die paraxialen Foki der ersten und zweiten Lumineszenzstrahlung 10, 14 können einen geringeren Abstand von der Eintrittsfläche 51 aufweisen.

Durch diese Lage der paraxialen Foki ist es möglich, Licht mit maximal möglichen Lichtleitwert oder nahezu maximalen Lichtleitwert zu übertragen. Insbesondere kann so viel wie möglich Nutzlicht in den Integrator 18 eingekoppelt werden. Unter Nutzlicht wird insbesondere der gesamte spektral nützliche Teil des Lichtes mit einem Aperturwinkel kleiner gleich einem maximalen Aperturwinkel der dem Integrator 18 nachfolgenden Optik verstanden.

## Patentansprüche

1. Beleuchtungsvorrichtung für einen einen Lichtmodulator (3, 47) aufweisenden Projektor (2), mit
einem ersten festkörperbasierten Beleuchtungsmodul (4), das ein erstes Lumineszenzmaterial (9) und eine erste Festkörperlichtquelle (7) aufweist, die eine erste Anregungsstrahlung (8) abgibt, die auf das erste Lumineszenzmaterial (9) gerichtet ist, das daraufhin eine erste Lumineszenzstrahlung (10) mit einem ersten Spektrum (K1) abgibt,
einem zweiten festkörperbasierten Beleuchtungsmodul (5), das ein zweites Lumineszenzmaterial (13) und eine zweite Festkörperlichtquelle (11) aufweist, die eine zweite Anregungsstrahlung (12) abgibt, die auf das zweite Lumineszenzmaterial (13) gerichtet ist, das daraufhin eine zweite Lumineszenzstrahlung (14) mit einem zweiten Spektrum (K2) abgibt,
einer Überlagerungseinheit (16, 20), die die erste und die zweite Lumineszenzstrahlung (10, 14) in einen Beleuchtungsstrahlengang einkoppelt, in dem es bis zum Ende (E) des Beleuchtungsstrahlenganges geführt wird, um den Lichtmodulator (3, 47) zu beleuchten, und einer Filtereinheit (16), die aus der ersten Lumineszenzstrahlung (10) Licht einer ersten Farbe (K3) und aus der zweiten Lumineszenzstrahlung (14) Licht einer zweiten Farbe (K4) so filtert, dass am Ende des Beleuchtungsstrahlenganges Licht der ersten und zweiten Farbe (K3, K4) vorliegt.

2. Beleuchtungsvorrichtung nach Anspruch 1, bei der
das erste Spektrum eine erste spektrale Leistungsdichte und das zweite Spektrum eine zweite spektrale Leistungsdichte aufweist,
wobei die erste spektrale Leistungsdichte um mehr als 50% mit der zweiten spektralen Leistungsdichte überlappt.

3. Beleuchtungsvorrichtung nach Anspruch 1 oder 2, bei der
das erste Spektrum ein Maximum bei einer ersten Wellenlänge und das zweite Spektrum ein Maximum bei einer zweiten Wellenlänge aufweist, wobei die zweite Wellenlänge größer ist als die erste Wellenlänge,
wobei die erste Lumineszenzstrahlung (10) mit einer ersten Lichtleistung und die zweite Lumineszenzstrahlung (14) mit einer zweiten Lichtleistung bereitgestellt ist,
und wobei die Filtereinheit (16) von der ersten Lumineszenzstrahlung (10) mindestens 70% der bereitgestellten ersten Lichtleistung für das Licht der ersten Farbe nutzt und von der zweiten Lumineszenzstrahlung (14) maximal 30% der bereitgestellten zweiten Lichtleistung für das Licht der zweiten Farbe nutzt.

4. Beleuchtungsvorrichtung nach Anspruch 3, bei der
die erste Wellenlänge der Farbe Grün entspricht und die zweite Wellenlänge der Farbe Gelb entspricht,
wobei die erste Farbe Grün und die zweite Farbe Rot ist.

5. Beleuchtungsvorrichtung nach einem der obigen Ansprüche, bei der das zweite Spektrum einen Infrarotanteil aufweist, den die Filtereinheit (16) weiterleitet.

6. Beleuchtungsvorrichtung nach einem der obigen Ansprüche, bei der das erste und/oder zweite festkörperbasierte Beleuchtungsmodul (3, 4) zur Erzeugung der Lumineszenzstrahlung (10, 14) frei von bewegten Teilen ist.

7. Beleuchtungsvorrichtung nach einem der obigen Ansprüche, bei der die Filtereinheit (16) einen dichroitischen Strahlvereiniger (16) umfasst, der gleichzeitig Teil der Überlagerungseinheit (16) ist.

8. Beleuchtungsvorrichtung nach einem der obigen Ansprüche, bei der der Beleuchtungsstrahlengang einen Lichtmischstab (18) aufweist, durch den die erste und die zweite Lumineszenzstrahlung (10, 14) läuft.

9. Beleuchtungsvorrichtung nach einem der obigen Ansprüche, die ein drittes Beleuchtungsmodul (6), das eine dritte Strahlung (50) abgibt, aufweist, wobei die dritte Strahlung (50) mittels der Überlagerungseinheit (16, 20) in den Beleuchtungsstrahlengang eingekoppelt wird.

10. Beleuchtungsvorrichtung nach Anspruch 8 und 9, bei der ein paraxialer Fokus der dritten Strahlung im Lichtmischstab (18) liegt und von einem paraxialen Fokus der ersten und/oder zweiten Lumineszenzstrahlung (10, 14) beabstandet ist.

11. Beleuchtungsvorrichtung nach einem der obigen Ansprüche, bei der das erste festkörperbasierte Beleuchtungsmodul (4) zwei Beleuchtungsteilmodule (30, 31) umfasst, deren abgegebene Teilmodul-Lumineszenzstrahlungen zu einem ersten Lumineszenzstrahlenbündel kombiniert werden, aus dem die Filtereinheit (16) das Licht der ersten Farbe filtert.

12. Beleuchtungsvorrichtung nach Anspruch 11, bei der die beiden Teilmodul-Lumineszenzstrahlungen benachbart verlaufen und zusammen auf ein Filterelement (16) der Filtereinheit treffen, das das Licht der ersten Farbe herausfiltert.

13. Beleuchtungsvorrichtung nach Anspruch 11, bei der die Teilmodul-Lumineszenzstrahlungen jeweils auf separate Filterelemente (65, 67) der Filtereinheit treffen, wobei die Filterelemente (65, 67) daraus jeweils Licht der ersten Farbe herausfiltern und das Licht der ersten Farbe danach zu einem gemeinsamen Strahlenbündel der ersten Farbe kombiniert wird.

14. Projektor mit einem Lichtmodulator (3, 47) und einer Beleuchtungsvorrichtung nach einem der obigen Ansprüche.
